# FASCICULE DE BREVET EUROPEEN

(11) **EP 0 488 844 B1**
(45) Date de publication et mention de la délivrance du brevet: **25.01.1995**
(21) Numéro de dépôt: 91403027.5
(22) Date de dépôt: 12.11.1991
(51) Int. Cl.: F16L 37/14

(54) **Dispositif de raccord, notamment pour l'assemblage d'une durite à un échangeur de chaleur de véhicule automobile**
Anschlussvorrichtung, insbesondere zur Verbindung eines Schlauches mit einem Automobilwärmeaustauscher
Connection device, especially for assembling a hose to a car heat exchanger

(30) Priorité: 27.11.1990 FR 9014787
(43) Date de publication de la demande: 03.06.1992
(73) Titulaire: HUTCHINSON S.A. une Société Anonyme dotée d'un Conseil de Surveillance et d'un Directoire, F-75008 Paris (FR)
(72) Inventeur: Godeau, Denis, F-45260 Vieilles Maisons sur Joudry (FR)
(74) Mandataire: Orès, Bernard

(56) Documents cités:
- EP-A- 0 327 441
- EP-A- 0 392 234
- US-A- 3 314 696
- US-A- 4 881 760

## Description

L'invention est relative à un dispositif de raccord, notamment pour l'assemblage d'une durite à un échangeur de chaleur de véhicule automobile.

Elle vise, plus particulièrement, un dispositif de raccord permettant un montage et démontage rapides à l'aide d'un assemblage utilisant comme liaison élastique un clip en U dont les branches sont sensiblement parallèles. Un dispositif de ce type, auquel correspond le préambule de la revendication 1, est décrit, par exemple, dans EP-A-0 327 441 où un raccord tubulaire et une boîte à eau d'échangeur de chaleur sont maintenus assemblés à l'aide d'un clip en U dont les branches sont logées dans des encoches transversales parallèles entre elles et diamétralement opposées ménagées dans le raccord tubulaire. Un épaulement annulaire de la tubulure de la boîte à eau, qui présente à ces branches une surface d'approche inclinée, verrouille en place les branches du clip, l'étanchéité entre le raccord tubulaire et une tubulure de la boîte à eau étant assurée par une bague en matériau du type élastomère comprimée radialement entre eux. La tubulure de la boîte à eau est munie de deux nervures axiales et excentriques qui, écartant les branches du U lorsque le raccord est soumis à une rotation, facilitent le déverrouillage intentionnel de l'assemblage. Un bossage sur la boîte à eau coopère avec un ergot sur le raccord pour faciliter le guidage longitudinal et radial du raccord au cours de l'assemblage.

Dans une telle réalisation, un élément de serrage distinct des éléments à assembler est nécessaire et c'est, par conséquent, un but de la présente invention de pallier cet inconvénient du dispositif précité tout en conservant ses avantages, à savoir une construction simple et peu coûteuse, une mise en oeuvre facile et qui élimine tout risque de désassemblage intempestif, de même que l'absence d'effort élevé aussi bien pour le montage que pour le démontage de l'ensemble.

C'est, aussi, un but de l'invention de fournir un dispositif de raccord qui permette, par simple contrôle visuel, de vérifier que la condition de verrouillage est réalisée.

L'invention a principalement pour objet un dispositif de raccord comprenant deux éléments, un organe tubulaire qui est solidarisé à une durite, et un embout, notamment de boîte à eau d'un échangeur de chaleur d'un véhicule automobile, l'organe tubulaire étant propre à être rapporté par emboîtement sur l'embout, où il peut être maintenu par une liaison élastique facilement démontable constituée par un clip en U dont les branches sont logées dans des ouvertures de passage ménagées dans l'organe tubulaire, l'étanchéité entre l'organe tubulaire et l'embout étant assurée par un joint, les branches du clip en U étant logées dans la condition d'assemblage du dispositif dans deux encoches transversales, parallèles entre elles et diamétralement opposées qui sont ménagées dans la paroi de l'organe tubulaire, lequel dispositif est caractérisé en ce que :
. il comprend en outre une bague logée à l'intérieur de l'organe tubulaire comportant sur sa périphérie au moins une languette élastique radiale, la bague étant mobile axialement entre une première position où, l'organe tubulaire n'étant pas emboîté sur l'embout, elle est située dans le plan perpendiculaire à l'axe du dispositif et comprenant les encoches, de manière à ce que sa partie non munie de languette masque lesdites encoches, la ou lesdites languettes étant alors comprimée(s), et une deuxième position, l'organe tubulaire étant emboîté sur l'embout ;
. l'élément qui est pourvu desdites encoches est muni de fentes en nombre égal à celui des languettes, lesdites fentes étant positionnées de manière à ce que, quand l'assemblage est réalisé, lesdites languettes se trouvant en face desdites fentes et émergent de celles-ci pour faire fonction de témoin d'encliquetage ; et en ce que
. le clip en U est solidaire de l'élément pourvu desdites encoches et fentes, les branches du clip étant écartées par ladite bague aussi longtemps que le dispositif n'est pas assemblé mais reprenant leur position opératoire d'immobilisation du raccord lorsque la bague est déplacée jusqu'à sa deuxième position dans l'organe tubulaire lors du rapprochement dudit organe et de l'embout.

Selon une autre caractéristique du dispositif de l'invention, la surface intérieure de ladite bague comporte une partie tronconique dont le diamètre diminue à partir de l'extrémité de la bague destinée à être placée près de l'extrémité libre de l'élément muni des encoches et l'autre élément comporte une partie annulaire périphérique dont le profil correspond à celui de ladite partie tronconique de manière que, lorsque les deux éléments sont poussés l'un vers l'autre pour réaliser l'assemblage, ladite partie annulaire périphérique repousse ladite bague en appuyant sur la partie tronconique de celle-ci.

Selon encore une autre caractéristique de l'invention, la surface intérieure de l'élément muni desdites encoches est conformée de manière à présenter un logement du joint, ledit logement étant avantageusement formé par un épaulement intérieur et un anneau rapporté après montage du joint dans ledit élément.

Selon l'invention, également, ledit anneau est conformé de manière à présenter une surface intérieure d'extrémité conique dont le plus grand diamètre est orienté vers l'extrémité libre de l'élément sur lequel il est monté de manière à offrir une surface de guidage en pente à l'extrémité de l'autre élément.

Selon un mode préféré de mise en oeuvre de l'invention, l'extrémité libre de l'autre élément comporte une première partie cylindrique de diamètre extérieur égal, au jeu nécessaire près, au diamètre intérieur de la partie du premier élément avec laquelle elle est destinée à coopérer pour assurer l'étanchéité en comprimant le joint, et une seconde partie de plus grand diamètre extérieur, destinée à pousser ladite bague et se terminant à une distance de l'extrémité telle que l'extrémité libre de l'embout soit en butée contre le premier élément lorsque la bague a été poussée à fond, c'est-à-dire que sa ou ses languette(s) s'est ou se sont déployée(s) dans la ou les fente(s) correspondante(s).

Selon une réalisation avantageuse, ladite seconde partie présente une surface extérieure conique s'élargissant vers l'arrière, c'est-à-dire du côté opposé à l'extrémité libre de l'embout, de même conicité que la partie conique de la bague.

Selon encore une autre caractéristique de l'invention, la surface extérieure de l'embout présente deux épaulements définis par ladite seconde partie et par une partie cylindrique de plus grand diamètre extérieur, respectivement, ménageant une gorge d'appui et de retenue pour les branches du clip.

Selon encore une autre caractéristique de l'invention, les extrémités des branches du clip en U sont munies de moyens propres à faciliter le démontage du raccord d'assemblage en diminuant l'effort nécessaire pour écarter les branches du U et lesdits moyens sont avantageusement constitués par une languette élastique courbe montée entre les extrémités libres des branches du U.

Dans une variante, lesdits moyens sont constitués par des prolongations respectives des branches du U, orientées l'une vers l'autre, parallèlement à la base du U et repliées, après leur croisement, de manière à former deux courtes branches parallèles aux branches du U et dont le pincement l'une vers l'autre entraîne l'écartement des branches du U.

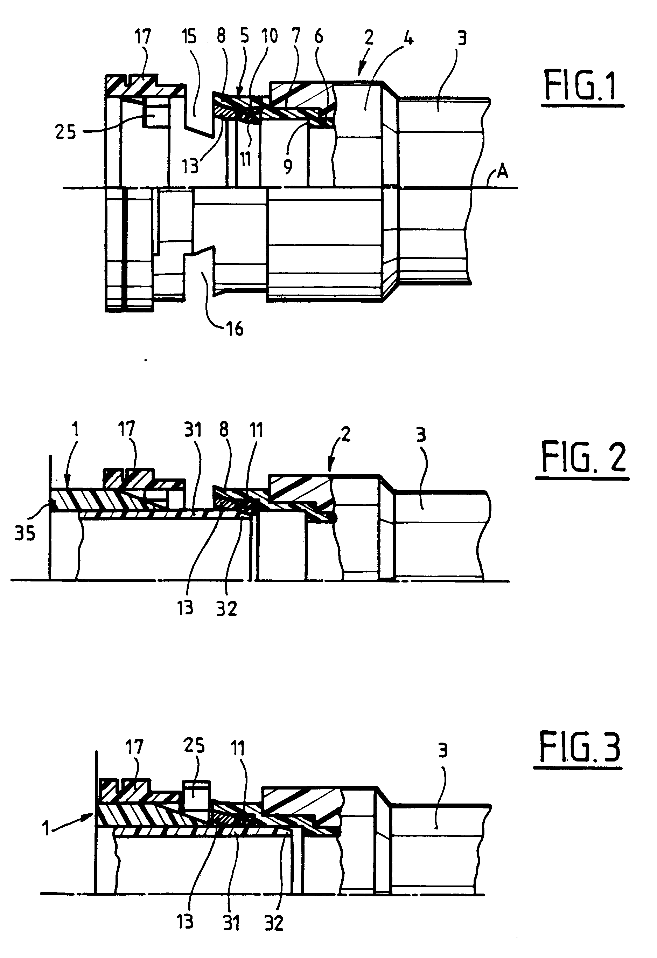

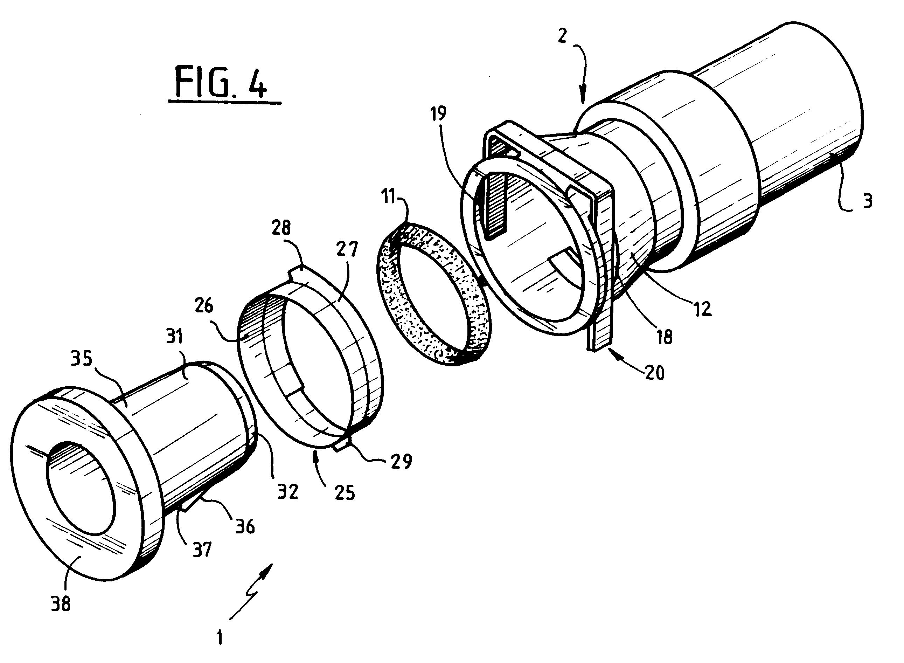

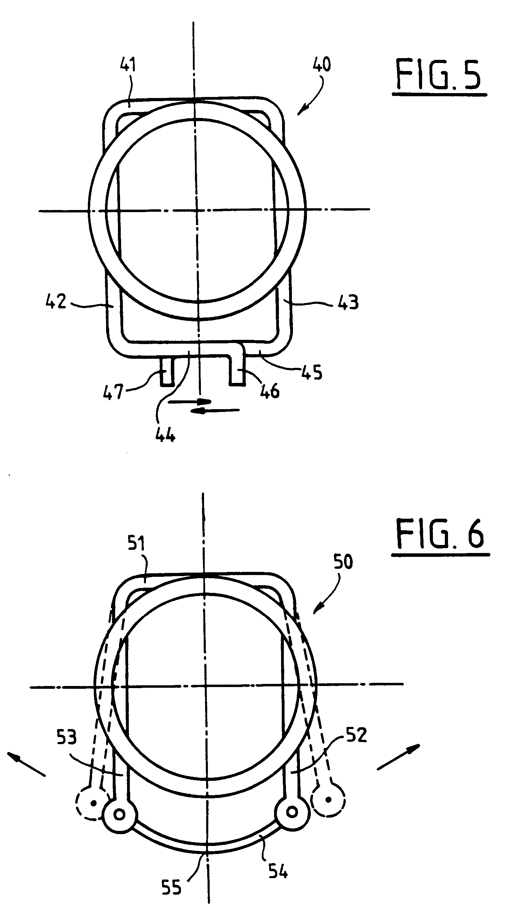

L'invention sera bien comprise par la description qui va suivre, faite en référence au dessin annexé dans lequel :
. la figure 1 est une vue en élévation latérale et partiellement en coupe axiale d'un organe tubulaire d'un dispositif selon l'invention avant montage ;
. la figure 2 est une vue partielle en coupe axiale du raccord en cours de montage, c'est-à-dire lors de l'assemblage de l'organe tubulaire, sur l'embout d'un échangeur de chaleur ;
. la figure 3 est une vue partielle en coupe axiale du raccord après assemblage ;
. la figure 4 est une vue éclatée des divers éléments constitutifs d'un dispositif selon l'invention ; et
. les figures 5 et 6 montrent des variantes d'un des éléments du dispositif.

Le dispositif de raccord illustré aux figures est du type de ceux décrits dans EP-A-0 327 441 où l'embout 1, faisant saillie de l'échangeur de chaleur, non représenté, est prévu pour être assemblé avec un organe tubulaire 2 fixé à un tuyau souple ou durite, 3. L'organe tubulaire 2, avantageusement en matière plastique moulée, comporte un manchon 4 d'axe A dans lequel est logée une chemise coaxiale 5, également en matière plastique moulée. Cette dernière est conformée suivant des parties cylindriques 6, 7 et 8, de diamètres progressivement croissants et qui ménagent ainsi un premier épaulement 9 et un second épaulement 10 sur lequel prend appui un joint d'étanchéité 11, du type torique ou à lèvres, maintenu en place par un anneau 13. La partie cylindrique de l'organe tubulaire 2, la plus distante du tuyau souple 3, se termine par une collerette évasée, 12, dans laquelle sont découpées deux fentes parallèles transversales relativement larges, 15, 16, diamétralement opposées, suivies d'une partie cylindrique, 17 de plus grand diamètre, elle-même pourvue de deux encoches parallèles transversales diamétralement opposées, 18, 19, (visibles sur la figure 4) et perpendiculaires aux fentes 15, 16 ; la largeur des encoches est juste suffisante pour permettre lors de l'assemblage le passage des branches d'un clip en U, 20, en métal ou en matière plastique suffisamment résistante et élastique. Dans la partie cylindrique 17 est montée une bague 25, comportant une partie conique lisse 26 et une partie cylindrique 27 dans laquelle sont ménagées deux languettes élastiques 28 et 29 dont la largeur est conjuguée de celle des fentes 15 et 16. Lorsque la bague 25 est mise en place dans l'organe tubulaire 2 avant montage de celui-ci sur l'échangeur de chaleur, la compression des languettes élastiques 28 et 29 la maintient en place dans la partie 17 de cet organe, comme montré sur la figure 1.

L'extrémité de l'embout 1 de l'échangeur de chaleur présente une première partie cylindrique 31 dont le diamètre extérieur est conjugué de celui de la partie cylindrique 7 de l'organe tubulaire 2, d'une part, et qui est légèrement supérieur à celui du diamètre interne du joint d'étanchéité 11, d'autre part. L'extrémité libre 32 de la partie 31 est en outre chanfreinée pour faciliter l'introduction de l'embout dans l'organe tubulaire et son glissement le long du joint 11, la pente du chanfrein étant sensiblement égale à celle de la surface conique intérieure d'extrémité de l'anneau 13 qui définit avec l'épaulement 10 le logement dudit joint, d'une part, et rend ce dernier imperdable, d'autre part, après démontage du raccord.

Comme bien montré sur les figures 1 à 3, la partie cylindrique 31 de l'embout 1 est, à distance de son extrémité chanfreinée 32, terminée par une partie 35 à surface extérieure conique ménageant deux rampes 36 inclinées vers l'arrière de l'embout 1 et de même pente que la partie conique 26 de la bague 25, la face arrière 37 des rampes 36 limitant, avec la face en regard transversale d'une collerette 38 de l'embout 1, un espace de réception des branches du clip en U, 20.

Pour l'assemblage du dispositif de raccord, l'organe tubulaire 2 auquel est fixée la durite 3 est rapproché de l'embout 1 de l'échangeur de chaleur ; les branches du clip en U, -solidaire de l'organe 2 par sa base-, sont alors écartées l'une de l'autre au-delà de leur position normale par la bague 25 logée dans la partie 17 de l'organe tubulaire. Ce dernier peut alors coiffer, sans effort important de montage, l'embout 1 de l'échangeur de chaleur et, au fur et à mesure du rapprochement de l'organe tubulaire 2 de la collerette 38, la bague 25 glisse dans la partie 17 jusqu'à ce que la bague 25 ayant échappé aux branches du clip 20, lesdites branches pénètrent dans l'espace ménagé entre la collerette 38 et la face postérieure 37 des rampes 36. L'immobilisation du dispositif de raccord est alors assurée, d'une part, tandis que l'apparition des languettes élastiques 28 et 29 de la bague 25 dans les fentes 15 et 16 indique que le raccordement a été effectué d'une façon satisfaisante.

Pour démonter l'assemblage, il suffit d'écarter les branches du clip en U et de tirer sur l'organe tubulaire 2 et la durite qui lui est associée, à l'écartement de l'embout 1.

En variante, le démontage s'effectue par une rotation relative des parties constitutives du raccord lorsque ce dernier est du type de ceux décrits dans FR-A-2 626 661 également au nom de la Demanderesse.

On se réfère maintenant aux figures 5 et 6 qui montrent schématiquement, des variantes de réalisations du clip du dispositif de l'invention.

Dans la variante illustrée figure 5, le clip 40 comporte une première partie en forme de U identique au clip de la réalisation précédente avec une âme 41 de positionnement et de solidarisation par rapport à l'organe tubulaire 2 et deux branches latérales 42 et 43, parallèles ou légèrement convergentes en l'absence d'effort extérieur exercé pour les écarter l'une de l'autre, lesdites branches se prolongeant par de premières portions 44 et 45, respectivement, sensiblement parallèles à l'âme 41 et elles-mêmes prolongées par de courts retours 46 et 47 dirigés sensiblement à angle droit par rapport aux portions 44 et 45. Pour l'actionnement d'un tel clip, les retours 46 et 47 sont rapprochés l'un de l'autre, comme montré par la double flèche de la figure 5, avec pour résultat un écartement l'une de l'autre des branches 42 et 43 qui permet de déverrouiller le raccord par écartement de l'organe tubulaire 2 de l'embout 1 de la boîte à eau.

Dans la variante illustrée figure 6, le clip 50 comporte une première partie en forme de U identique au clip de la réalisation illustrée sur les figures 1 à 4, avec une âme 51 de solidarisation avec l'organe tubulaire 2 et deux branches latérales 52, 53, parallèles ou légèrement convergentes en l'absence d'effort extérieur exercé pour les écarter l'une de l'autre, les extrémités des branches du U du côté opposé à l'âme 51 du clip étant reliées par une languette courbe 54 présentant une certaine élasticité de sorte que, la languette étant montée avec sa convexité tournée vers l'extérieur du U, une simple pression sur ou au voisinage du sommet 55 de la languette suffit pour écarter les branches du clip.

## Revendications

1. Dispositif de raccord comprenant deux éléments, un organe tubulaire qui est solidarisé à une durite, et un embout, notamment de boîte à eau d'un échangeur de chaleur d'un véhicule automobile, l'organe tubulaire étant propre à être rapporté par emboîtement sur l'embout, où il peut être maintenu par une liaison élastique facilement démontable constituée par un clip en U (20, 40, 50) dont les branches sont logées dans des ouvertures de passage ménagées dans l'organe tubulaire (2), l'étanchéité entre l'organe tubulaire (2) et l'embout (1) étant assurée par un joint (11), les branches du clip en U étant logées dans la condition d'assemblage du dispositif dans deux encoches transversales (18, 19), parallèles entre elles et diamétralement opposées qui sont ménagées dans la paroi de l'organe tubulaire, lequel dispositif est caractérisé en ce que :
. il comprend en outre une bague (25) logée à l'intérieur de l'organe tubulaire comportant sur sa périphérie au moins une languette (28, 29) élastique radiale, la bague étant mobile axialement entre une première position où, l'organe tubulaire n'étant pas emboîté sur l'embout, elle est située dans le plan perpendiculaire à l'axe du dispositif et comprenant les encoches, de manière à ce que sa partie non munie de languette masque lesdites encoches, la ou lesdites languettes (28, 29) étant alors comprimée(s), et une deuxième position, l'organe tubulaire étant emboîté sur l'embout ;
. l'élément (2) qui est pourvu desdites encoches est muni de fentes (15, 16) en nombre égal à celui des languettes (28, 29), lesdites fentes étant positionnées de manière à ce que, quand l'assemblage est réalisé, lesdites languettes se trouvant en face desdites fentes et émergent de celles-ci pour faire fonction de témoin d'encliquetage ; et en ce que
. le clip en U est solidaire de l'élément pourvu desdites encoches et fentes, les branches du clip étant écartées par ladite bague (25) aussi longtemps que le dispositif n'est pas assemblé mais reprenant leur position opératoire d'immobilisation du raccord lorsque la bague est déplacée jusqu'à sa deuxième position dans l'organe tubulaire (2) lors du rapprochement dudit organe et de l'embout (1).

2. Dispositif selon la revendication 1, caractérisé en ce que la surface intérieure de ladite bague (25) comporte une partie tronconique (26) dont le diamètre diminue de l'extrémité de la bague destinée à être placée près de l'extrémité libre de l'élément muni des encoches, et en ce que l'autre élément comporte une partie annulaire périphérique dont le profil correspond à celui de ladite partie tronconique, de manière que, lorsque les deux éléments sont poussés l'un vers l'autre pour réaliser l'assemblage, ladite partie annulaire périphérique repousse ladite bague (25) en appuyant sur la partie tronconique de celle-ci.

3. Dispositif selon la revendication 1 ou la revendication 2, caractérisé en ce que la surface intérieure de l'élément (2) muni desdites encoches (18, 19) est conformée de manière à présenter un logement pour le joint d'étanchéité (11), ledit logement étant avantageusement formé par un épaulement intérieur (10) et un anneau (13) rapporté après montage du joint (11) dans ledit élément (2).

4. Dispositif selon l'une quelconque des revendications précédentes, caractérisé en ce que ledit anneau (13) est conformé de manière à présenter une surface intérieure d'extrémité conique dont le plus grand diamètre est orienté vers l'extrémité libre de l'élément (2) sur lequel il est monté de manière à offrir une surface de guidage en pente à l'extrémité de l'autre élément.

5. Dispositif selon l'une quelconque des revendications précédentes, caractérisé en ce que l'extrémité libre de l'embout (1) comporte une première partie (31) cylindrique de diamètre extérieur égal, au jeu nécessaire près, au diamètre intérieur de la partie de l'organe tubulaire (2) avec lequel elle est destinée à coopérer pour assurer l'étanchéité en comprimant ledit joint (11) et une seconde partie (35) de plus grand diamètre extérieur, destinée à pousser ladite bague (25) et qui présente une surface extérieure conique s'élargissant en direction de l'extrémité libre de l'embout (1) de même conicité que la partie conique (26) de la bague (25).

6. Dispositif selon la revendication 5, caractérisé en ce que la surface extérieure de l'embout (1) présente deux rampes (36) définissant avec une collerette (38) de l'embout (1) un logement d'appui et de retenue pour les branches du clip (20, 40, 50).

7. Dispositif selon l'une quelconque des revendications précédentes, caractérisé en ce que les extrémités des branches du clip (40, 50) sont munies de moyens propres à faciliter le démontage de l'assemblage en diminuant l'effort nécessaire pour écarter les branches (42, 43 ; 52, 53) dudit clip (40, 50).

8. Dispositif selon la revendication 7, caractérisé en ce que lesdits moyens sont constitués par une languette élastique courbe (54) montée entre les extrémités libres des branches (52, 53) du clip en U (50).

9. Dispositif selon la revendication 7, caractérisé en ce que lesdits moyens sont constitués par des prolongements (44, 45 ; 46, 47) des branches (42, 43) du clip (40) en U et dont le rapprochement de l'un vers l'autre par pincement entraîne l'écartement des branches (42, 43) du clip (40) en U.

## Patentansprüche

1. Vorrichtung zum Anschließen, die zwei Elemente umfaßt, nämlich ein röhrenförmiges Gebilde, das an einem Rohr befestigt ist und ein Ansatzstück, insbesondere ein Ansatzstück eines Wasserbehälters eines Wärmeaustauschers für Kraftfahrzeuge, wobei das röhrenförmige Gebilde geeignet ist, durch Ineinandergreifen an das Ansatzstück angefügt zu werden, wo es mittels einer leicht demontierbaren, elastischen Verbindung gehalten wird, die aus einem Klip in Form eines U (20, 40, 50) besteht, wobei dessen Schenkel in den Durchgangsöffnungen, mit denen das röhrenförmige Gebilde (2) versehen ist, gelagert sind, wobei die Dichtigkeit zwischen dem röhrenförmigen Gebilde (2) und dem Ansatzstück (1) des Wasserbehälters durch ein Verbindungsstück (11) gewährleistet wird und die Schenkel des U-förmigen Klips dann, wenn die Vorrichtung angeschlossen ist, in zwei transversalen Kerben (18, 19), die zueinander parallel sind und einander diametral geyenüberliegen und die an der Wand des röherenförmigen Gebildes ausgebildet sind, gelagert sind, wobei die besagte Vorrichtung dadurch gekennzeichnet ist, daß,
· sie darüber hinaus einen Ring (25) besitzt, der im Inneren des röhrenförmigen Gebildes gelagert ist und an seiner Peripherie mindestens eine radiale, elastische Zunge (28, 29) besitzt, wobei der Ring axial beweglich ist, zwischen einer ersten Position, in der das röhrenförmige Gebilde nicht in das Ansatzstück greift und die in der Ebene liegt, die senkrecht zur Achse der Vorrichtung liegt und die Kerben umfaßt, so daß der Teil von ihm, der nicht mit Zungen versehen ist, die besagten Kerben an der Stelle maskiert, an der die erwähnte(n) Zunge(n) (28, 29) schließlich zusammengedrückt werden; und einer zweiten Position, in der das röhrenförmige Gebilde in das Ansatzstück greift,
· das Element (2), das mit den besagten Kerben versehen ist, mit Spalten (15, 16) ausgestattet ist, und zwar mit einer Anzahl, die der Zahl der Zungen (28, 29) entspricht. Die besagten Kerben sind so angeordnet, daß dann, wenn die Verbindung besteht, sich die besagten Zungen gegenüber den besagten Kerben befinden und aus diesen als Bestätigung für das Einklinken hervorragen; und dadurch, daß
· der U-förmige Klip zu dem Element gehört, das für die erwähnten Kerben und Spalten vorgesehen ist und die Schenkel des Klips durch den besagten Ring (25) genau solange eingedrückt werden, wie die Vorrichtung noch nicht montiert ist, aber ihre Arbeitsstellung zur Fixierung des Anschlußes dann einnehmen, wenn der Ring bis in seine zweite Position in das röhrenförmige Gebilde (2) im Laufe der Annäherung des erwähnten Gebildes und des Ansatzstückes (1), verschoben wird.

2. Vorrichtung gemäß Anspruch 1, dadurch gekennzeichnet, daß die innere Oberfläche des besagten Ringes (25) eine abgestumpfte Partie (26) besitzt, deren Durchmesser durch das Ende des Ringes verringert wird und die dazu vorgesehen ist, nahe an dem freien Ende des mit den Kerben versehenen Elements plaziert zu werden; und dadurch, daß das andere Element eine periphere, ringförmige Partie besitzt, deren Profil demjenigen der besagten abgestumpften Partie entspricht, so daß dann, wenn die beiden Elemente gegeneinander gedrückt werden, um den Anschluß durchzuführen, die besagte, periphere ringförmige Partie den besagten Ring (25) zurückdrückt, indem sie auf dessen stumpfe Partie drückt.

3. Vorrichtung gemäß Anspruch 1 oder Anspruch 2, dadurch gekennzeichnet, daß die innere Oberfläche des Elementes (2), das mit den erwähnten Kerben (18, 19) versehen ist, entsprechend angepaßt ist, um ein Lager für das Verbindungsstück (11) darzustellen, wobei das besagte Lager vorteilhafterweise durch einen inneren Flansch (10) und ein Glied (13) gebildet wird, das nach der Montage des Anschlußstückes (11) in das besagte Element (2) verschwindet.

4. Vorrichtung gemäß einem der vorherigen Ansprüche, dadurch gekennzeichnet, daß das besagte Glied (13) so angepaßt ist, daß es eine innere Oberfläche mit konischem Ende darstellt, deren größter Durchmesser in Richtung des freien Endes des Elementes (2) zeigt, auf das es montiert wird, um für das Ende des anderen Elementes eine Gleitoberfläche in Form einer schiefen Ebene zu bilden.

5. Vorrichtung gemäß einem der vorherigen Ansprüche, dadurch gekennzeichnet, daß das freie Ende des Ansatzstückes (1) eine vordere zylindrische Partie (31) besitzt. deren äußerer Durchmesser, vom notwendigen Spiel abgesehen, dem inneren Durchmesser der Partie des röhrenförmigen Gebildes (2) entspricht, die dazu vorgesehen ist, mit ihm zusammen die Dichtigkeit zu gewährleisten, indem es das besagte Verbindungsstück (11) und eine zweite Partie (35) mit einem größeren Außendurchmesser zusammendrückt, wobei die zweite Partie dazu gedacht ist, den besagten Ring (25) zurückzudrücken und außen eine konische Oberfläche besitzt, die in Richtung auf das freie Ende des Ansatzstückes (1) vergrößert ist, welches die gleichen konischen Verhältnisse aufweist, wie die konische Partie (26) des Ringes (25).

6. Vorrichtung gemäß Anspruch 5, dadurch gekennzeichnet, daß die äußere Oberfläche des Anschlußstückes (1) zwei Absätze (36) darstellt, die durch eine Krause (38) des Ansatzstückes (1) ein Lager zur Stütze und zum Rückhalt für die Schenkel des Klips (20, 40, 50) darstellt.

7. Vorrichtung gemäß einem der vorherigen Ansprüche, dadurch gekennzeichnet, daß die Enden der Schenkel des Klips (40, 50) mit Teilen versehen sind, die dazu geeignet sind, die Demontage der Verbindung zu erleichtern, indem sie die zum Zusammendrücken der Schenkel von besagtem Klip (40, 50) nötige Kraft herabsetzen (42, 43; 52, 53).

8. Vorrichtung gemäß Anspruch 7, dadurch gekennzeichnet, daß die besagten Teile aus einer elastischen, gekrümmten Zunge (54) bestehen, die zwischen den freien Enden der Schenkel (52, 53) des U-förmigen Klips (50) montiert ist.

9. Vorrichtung gemäß Anspruch 7, dadurch gekennzeichnet, daß die besagten Teile aus Verlängerungen (44, 45; 46, 47) der Schenkel (42, 43) des U-förmigen Klips (40) bestehen und deren Annäherung aneinander durch Zusammendrücken ein Entfernen der Schenkel (42,43) des U-förmigen Klips voneinander verursacht.

## Claims

1. A coupling device comprising two elements, a tubular element which is rigid with a hose connection, and a socket particularly on the water tank of a heat exchanger of a motor vehicle, the tubular member being adapted to be attached by being fitted onto the socket where it can be held by an easily demountable flexible connecting means consisting of a U-shaped clip (20, 40, 50) the arms of which are seated in passages provided in the tubular member (2), sealing-tightness between the tubular member (2) and the socket (1) being ensured by a gasket (11), the arms of the U-shaped clip being, in the assembled condition of the device, housed in two transverse notches (18, 19) which are parallel with and diametrically opposite each other, being disposed in the wall of the tubular member, the said device being characterised in that:
- it further comprises a ring (25) seated inside the tubular member, comprising on its periphery at least one radial flexible tongue(28, 29), the ring being adapted for axial movement between a first position in which, when the tubular member is not fitted onto the socket, it is situated in the plane at right-angles to the axis of the device and comprising notches, so that its part which does not have a tongue masks the said notches, the said tongue or tongues (28, 29) then bring compressed, and a second position, when the tubular member is fitted onto the socket;
- the element (2) which carries the said notches is provided with slots (15, 16) equal in number to that of the tongues (28, 29), the said slots being so positioned that when assembly is performed the said tongues are opposite the said slots and emerge therefrom to serve as evidence of snap fitment, and in that
- the U-shaped clip is rigid with the element which carries the said notches and slots, the arms of the clip being moved apart by the said ring (25) while the device is not assembled but resuming their working position and immobilising the connection when the ring is displaced into its second position in the tubular member (2) when the said member and the socket (1) are fitted together.

2. A device according to claim 1, characterised in that the inside surface of the said ring (25) comprises a frustoconical part (26) the diameter of which diminished from the end of the ring which is intended to be placed close to the free end of the element carrying the notches and in that the other element comprises a peripheral annular portion the profile of which corresponds to that of the said frustoconical part so that when the two elements are pushed towards each other to complete assembly, the said peripheral annular part pushes back the said ring (25), bearing on the frustoconical part thereof.

3. A device according to claim 1 or claim 2, characterised in that the inside surface of the element (2) which carries the said notches (18, 19) is so shaped that it offers a seating for the sealing-tight gasket (11), the said seating being advantageously formed by an inner shoulder (10) and a ring (13) attached after the gasket (11) has been fitted into the said element (2).

4. A device according to any one of the preceding claims, characterised in that the said ring (13) is so shaped as to offer an inner surface with a conical end, the largest diameter of which is orientated towards the free end of the element (2) on which it is so mounted that it offers a sloping guidance surface to the end of the other element.

5. A device according to any one of the preceding claims, characterised in that the free end of the socket (1) comprises a first cylindrical part (31) the diameter of which, subject to the necessary clearance, is equal to the inside diameter of the part of the tubular member (2) with which it is intended to co-operate, in order to guarantee sealing-tightness by compressing the said gasket (11) and a second part (35) of greater outside diameter, intended to push on the ring (25) and which has a conical outer surface which widens out in the direction of the free end of the socket (1) of the same conicity as the conical part (26) of the ring (25).

6. A device according to claim 5, characterised in that the outer surface of the socket (1) has two ramps (36) which define with a collar (38) on the socket (1) a seating on which the arms of the clip (20, 40, 50) bear and can be retained.

7. A device according to any one of the preceding claims, characterised in that the ends of the arms of the clip (40, 50) are provided with means adapted to facilitate dismantling of the assembly by reducing the effort needed to move aside the arms (42, 43; 52, 53) of the said clip (40, 50).

8. A device according to claim 7, characterised in that the said means are constituted by a curved flexible tongue (54) mounted between the free ends of the arms (52, 53) of the U-shaped clip (50).

9. A device according to claim 7, characterised in that the said means are constituted by extensions (44, 45; 46, 47) of the arms (42, 43) of the U-shaped clip (40), a squeezing action as the one is brought towards the other causing the arms (42, 43) of the U-shaped clip (40) to move apart from each other.
